# EUROPEAN PATENT APPLICATION

(11) **EP 2 660 783 A2**
(43) Date of publication of application: **06.11.2013**
(21) Application number: 13165732.2
(22) Date of filing: 29.04.2013
(51) Int. Cl.: G06T 19/00

(54) **A virtual navigation system for video**

(30) Priority: 02.05.2012 US 201213461783
(71) Applicant: Harman International (China) Holdings Co., Ltd., Huangpu District Shanghai 200003 (CN)
(72) Inventor: He, Jai, 201100 Shanghai (CN); Weyrich, Norman, 201206 Shanghai (CN); Zhou, Weifeng, 200123 Shangai (CN); Qiao, Shanshan, 200083 Shanghai (CN)
(74) Representative: Patentanwälte Westphal, Mussgnug & Partner

(57) **Abstract**

System and method for adjusting the parameters of an image capturing device, such as a camera that captures a sequence of images and generates another image from the captured sequence of images using parameters that identify a virtual location and overlaying the generated image with a 3D generated image where distortion compensation has occurred been applied to the image.

## Description

### BACKGROUND

### 1. Field of the Invention.

This application relates to the field of video processing. More specifically, the application relates to systems and methods for providing virtual navigation for video.

### 2. Related Art.

It is known to provide apparatus for processing images capable of moving the position of a visual point and overlay graphics upon an image. But, previous approaches have been limited in their ability to capture the images. Typically the approaches have only allowed or employed coordinates of the picture elements on an imaging device and the angle of the imaging device to be used when applying a rotational transformation to the image data. Simply put, only the visual point of the capture device is adjusted in the known approaches. Further, the known approaches are based on static positions of the imaging device or camera that captures distortion free images.

Thus, there is a need in the art for improvements that enable other visual points to be adjusted while compensating for distortion in a captured device that is moving. The aforementioned shortcomings and others are addressed by systems and related methods according to aspects of the invention.

### SUMMARY

In view of the above, systems and methods are provided for adjusting the parameters of an image capturing device, such as a camera, that captures a sequence of images and generates another image from the captured sequence of images using parameters that identify a virtual location and overlaying the generated image with a 3D generated image where compensating for distortion that has occurred in the image. The distortion is typically introduced by the optical capture device (e.g. radial distortion), while a computer generated image is ideal without distortion. In order for both an optical captured image and a computer generated image to be synthesized or combined together seamlessly, the computer generated image typically needs distortion compensation.

Other devices, apparatus, systems, methods, features and advantages of the invention will be or will become apparent to one with skill in the art upon examination of the following figures and detailed description. It is intended that all such additional systems, methods, features and advantages be included within this description, be within the scope of the invention, and be protected by the accompanying claims.

### BRIEF DESCRIPTION OF THE FIGURES

The description below may be better understood by referring to the following figures. The components in the figures are not necessarily to scale, emphasis instead being placed upon illustrating the principles of the invention. In the figures, like reference numerals designate corresponding parts throughout the different views.

FIG. 1 is a block diagram of an image sequence capture by a video capture unit having a parameter setting unit in accordance with an example implementation.

FIG. 2 is a drawing of the video capture unit of FIG. 1 and virtual capture device in accordance with an example implementation.

FIG. 3 is a block diagram of the processing of the captured video that is overlaid with a 3D object image in accordance with an example implementation.

FIG. 4 is a flow diagram of the video navigation system of FIG. 3 in accordance with an example implementation.

### DETAILED DESCRIPTION

An approach of adjusting the parameters of an image capturing device, such as a camera is described. Parameters, such as tilt angle may be adjusted via a user interface. The user interface may be a touch panel that enables parameters to be changed. A processed image that results from the captured video image may also be processed to remove or reduce distortion caused by lens or movement.

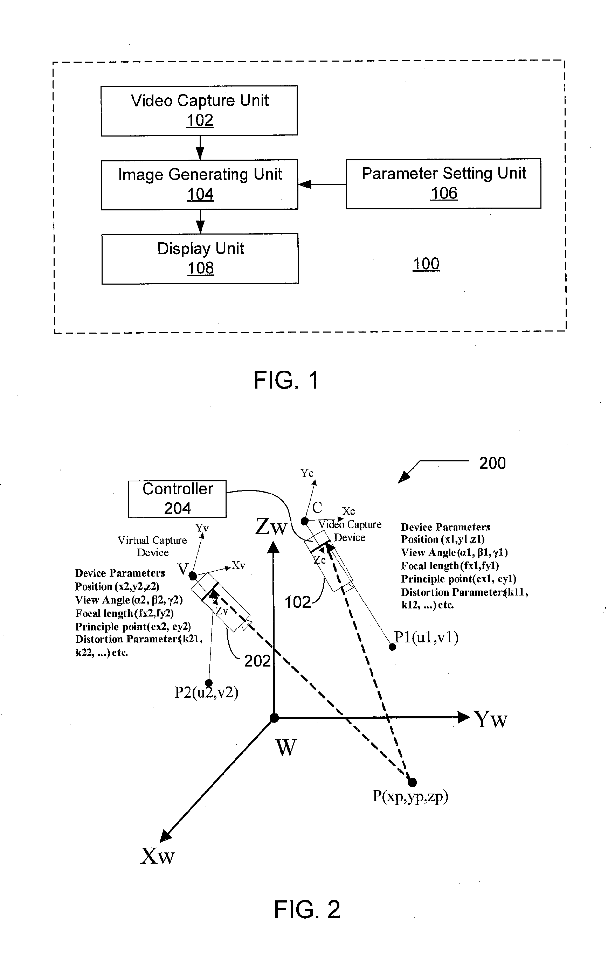

In FIG. 1, a block diagram of a virtual navigation system (VNS) 100 with a video capture unit 102 having a parameter setting unit 106 in accordance with an example implementation. The VNS 100 may include a video capture unit 102 that captures a scene. The video capture unit 102 may be a CMOS imager or similar device capable of capturing an image and converting it to digital data. The VNS 100 may also have a parameter setting unit 106 that is able to adjust the parameters used by the virtual capture unit 102. The parameter setting unit 106 may be a data structure in memory that stores parameters for use by the image generating unit 104 that is entered via hardware, such as a touch screen or keypad. The image generating unit 104 is employed to generate another image with virtual parameters. The generated image may then be sent to a display unit 108 that displays the generated image. The display unit 108 may be an actual hardware type display, such as a computer monitor, television, or similar graphic capable display device. In other implementations the display unit may be a display driver that formats the graphical digital data for display on a physical display device.

In operation, the VNS 100 captures an image sequence with the video capture unit 102. The parameter setting unit 106 enables adjustment of the parameters used by the image capture unit 102 by user interaction or automatic calculation. The parameters that are able to be adjusted may include but is not limited to the virtual capture device position, viewing angle, focal length, distortion parameters, etc. The image generating unit 104 then generates a different view of the scene using the captured image sequence, the video capture device 102 and the parameter set of the virtual camera.

The parameter setting unit 106 is responsible for adjusting the virtual capture device parameters used in the image generating unit 104. The parameter setting unit 106 may include, but is not limited to, adjusting parameters by user gesture or automatic calculation. The user gesture may include finger touch on a touch screen to control the viewing angle. The automatic calculation may include changes to the viewing angle according to the distance between an obstacle and the video capture unit 102.

Turning to FIG. 2, a drawing 200 of the video capture unit 102 of FIG. 1 and virtual capture device 202 in accordance with an example implementation. The image generating unit 104 generates another image from the image captured by the video capturing unit 102. The video capturing unit 102 may have a digital video camera with a CMOS or similar imager acting as a video capture device. In other implementations, analog video signals may be captured by the video camera and converted to digital images. The generation of the other image also makes use of parameters from the parameter setting unit 106. Some of the parameters that may be entered and stored, or calculated include Position, View Angle, Focal Length, Distortion Parameters, and Principle Point of the video capture device of the video capturing unit 102 and the virtual capture device 202. The capture device 102 may be controlled via a microprocessor or controller 204 that executes instructions that result in images captured via the CMOS imager or other image capturing apparatus are used to generate and/or store the captured images.

Without loss of generality, FIG. 2 depicts how the point P(xp, yp, zp) from the world coordinate system is projected by the video capture device of the video capture unit 102 and re-projected by the virtual capture device 202. Accordingly, both the pixel P1(u1, v1) in the capture device coordinate C and pixel P2(u2, v2) in the virtual capture device 202 coordinate V correspond to the same point P(xp, yp, zp). For the generation of the pixel value of P2, first the corresponding coordinate of P(xp, yp, zp) is calculated from the coordinates of P2. It is assumed that the captured scene is in a plane. Then P is re-projected to the capture device coordinate C obtaining the coordinate P1(u1, v1). The pixel value of P2 is equal to the pixel value of P1.

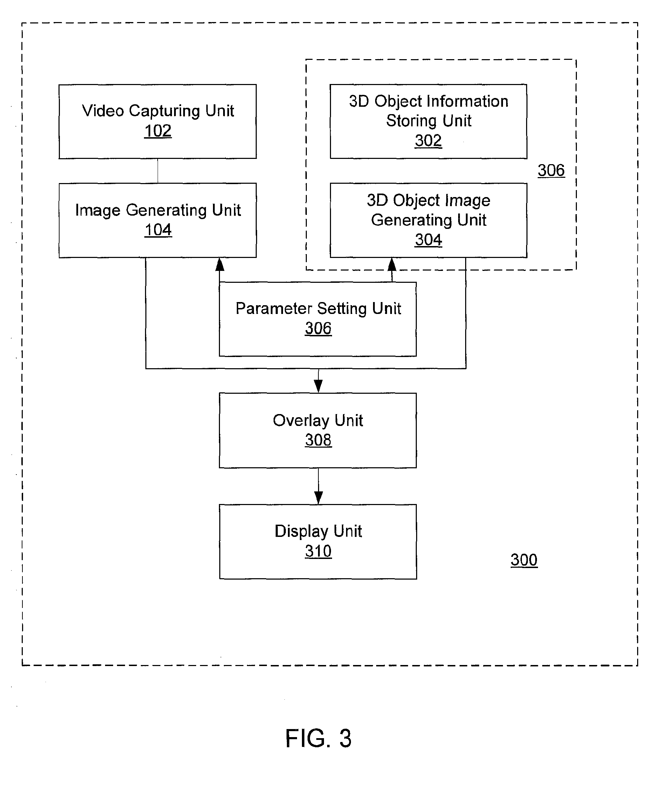

In FIG. 3, a block diagram of the VNS 300 processing captured video that is overlaid with a 3D object image in accordance with an example implementation is depicted. The display unit 310 may display the overlaid 3D object image. Real or virtual 3D images that are not captured by the video capturing unit 102 may be overlaid to the image generated by the image generating unit 104. The 3D object information storing unit 302 may store the 3D object information, e.g. shape, size etc.

The video capturing unit 102 may have an image capturing device such as a video camera. The image capturing device captures a sequence of images that are provided in a digital format by the video capturing unit 102. Non-digital sequences of images may be converted by the video capturing unit 102 into digital image data. The image generating unit generates another digital image using the digital image data from the video capturing unit 102 and device parameters stored in the parameters setting unit 306. Some of the plurality of device parameters that may be entered and stored, or calculated may include Position, View Angle, Focal length, Distortion Parameters, and Principle Point of the video capture device of the video capturing unit 102 and the virtual capture device 202 employed by the image generating unit 104.

3D object information may be stored in a 3D object information storing unit 302. The 3D object information storing unit may be implemented as a data store in memory and/or media such as a digital video disk (DVD), where the data store is a data structure that stores the digital data in memory or in a combination of hardware and software such as removable memory and hard disk drives (HDD). The 3D object information storing unit 302 may be accessed by the 3D object image generating unit 304 in order to generate a 3D image. The 3D object image generating unit 304 generates what the 3D object will be in the virtual capture device focal plane with the virtual capture device 202 parameter. The 3D Object information storing unit 302 and 3D object image generating unit 304 may be combined into a single unit, device, software or implemented separately. In other implementations, the 3D object information storing unit 302 may be separate from the VNS 300. The overlay unit 308 may overlay or combine both the image generated by the image generating unit 104 and the image generated by the 3D object image generating unit 304. Examples of 3D objects that may be overplayed by overlay unit 308 may include but is not limited to boundary boxes, signs, parking markers, and vehicle tracks corresponding to a steering angle. The resulting overlay image or combined image may then be displayed by display unit 108.

The 3D object information may refer to a point or vertex position which a computer was using to construct or draw the 3D object. Images may not be selected to draw, but a subsequence of images may be transformed from the captured source images. Thus the 3D image is generated by 3D object image generation when supplied with device parameters, such as a vertex position.

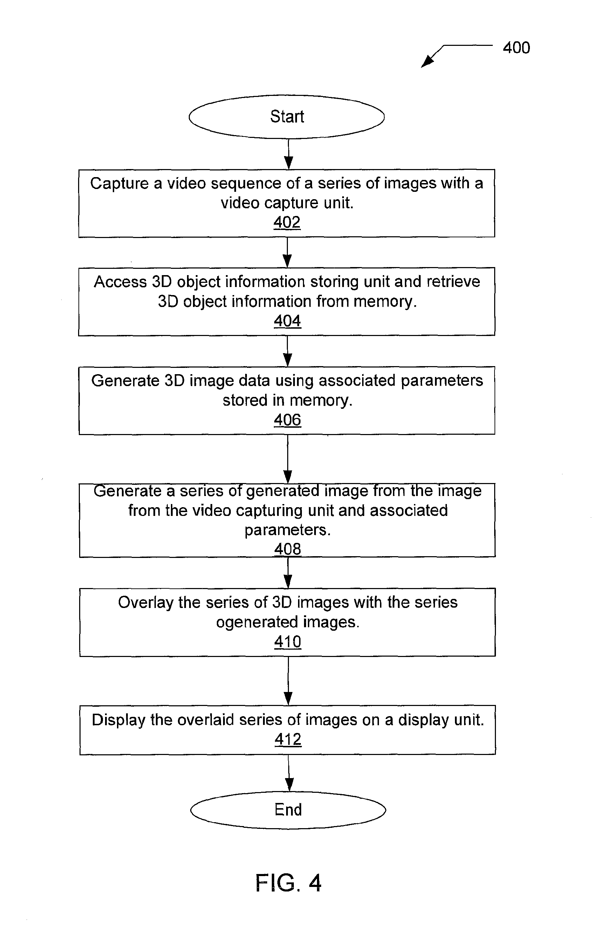

Turning to FIG. 4, a flow diagram 400 of the VNS 300 of FIG. 3 in accordance with an example implementation is depicted. The diagram starts by capturing a video sequence of a series of images with a video capture unit 402. Access the 3D object information 404 stored in a storing unit 302. The storing unit that stores the 3D object information may be implemented as a data store that is stored in a memory local to the VNS 300 or in other implementations may be remotely accessed over a network. A 3D image is generated by the 3D object image generating unit 304 using parameters from the parameter setting unit 306 in step 406. A series of generated images is generated by the image generating unit 104 that also uses parameters from the parameter setting unit 306 using the video sequence captured by the video capture unit in step 408. The parameter setting unit 306 may be implemented as a data store that is stored in a memory that is local to the VNS 300. The series of generated images that was generated by the image generating unit 104 is overlaid with the 3D images generated by the 3D object image generating unit 304 in step 410. In step 412, the resulting overlaid series of images may then be displayed on display unit 108. It is understood that the order of some of the steps in the flow diagram may be changed or done concurrently in other implementations.

It will be understood, and is appreciated by persons skilled in the art, that one or more processes, sub-processes, or process steps described in connection with FIG. 4 may be performed by hardware and/or software (machine readable instructions). The hardware and/or software may be a "server" which may include a combination of hardware and software operating together as a dedicated server or it may mean software executed on a server to implement the approach previously described. If the process is performed by software, the software may reside in software memory (not shown) in a suitable electronic processing component or system such as one or more of the functional components or modules schematically depicted in the figures. A processor or controller that is coupled to the software memory may execute instructions stored in the software memory. The software memory may be a section of a larger or general memory coupled to the processor locally.

The software in software memory may include an ordered listing of executable instructions for implementing logical functions (that is, "logic" that may be implemented either in digital form such as digital circuitry or source code or in analog form such as analog circuitry or an analog source such as an analog electrical, sound or video signal), and may selectively be embodied in any non-transitory computer-readable medium for use by or in connection with an instruction execution system, apparatus, or device, such as a computer-based system, processor-containing system, or other system that may selectively fetch the instructions from the instruction execution system, apparatus, or device and execute the instructions. In the context of this disclosure, a "computer-readable medium" is any tangible means that may contain or store the program for use by or in connection with the instruction execution system, apparatus, or device. The tangible computer readable medium may selectively be, for example, but is not limited to, an electronic, magnetic, optical, electromagnetic, infrared, or semiconductor system, apparatus or device. More specific examples, but nonetheless a non-exhaustive list, of tangible computer-readable media would include the following: a portable computer diskette (magnetic), a RAM (electronic), a read-only memory "ROM" (electronic), an erasable programmable read-only memory (EPROM or Flash memory) (electronic) and a portable compact disc read-only memory "CDROM" (optical). Note that the computer-readable medium may even be paper (punch cards or punch tape) or another suitable medium upon which the instructions may be electronically captured, then compiled, interpreted or otherwise processed in a suitable manner if necessary, and stored in a computer memory.

The foregoing description of implementations has been presented for purposes of illustration and description. It is not exhaustive and does not limit the claimed inventions to the precise form disclosed. Modifications and variations are possible in light of the above description or may be acquired from practicing the invention. The claims and their equivalents define the scope of the invention.

## Claims

1. A virtual navigation system (VNS) for video, comprising:
a video capture unit that captures a series of images where the series of images have distortion;
a 3D object image generating unit that generates a series of 3D images;
an image generating unit that generates a series of generated images from the series of images, where the series of generated images are free of distortion; and
an overlay unit that overlays the series of 3D images with the series of generated images.

2. The VNS of claim 1, where the image generating unit further includes a plurality of device parameters stored in memory.

3. The VNS as in any of claims 1 or 2, where the 3D object image generation unit further includes a plurality of device parameters stored in memory.

4. The VNS of claim 3, where the 3D object image generation unit is further configured to access previously stored 3D object information.

5. The VNS of claim 4, where the previously stored 3D object information is stored locally at the VNS.

6. The VNS as in any of claims 1 - 5, where the video capture unit employs a CMOS imager.

7. A method for a virtual navigation system (VNS) for video, comprising:
capturing a series of images with a video capture unit, where the series of images have distortion;
generating a series of 3D images;
generating a generated series of images without distortion from the series of 3D images; and
overlaying the series of 3D images with the series of generated images.

8. The method for VNS of claim 7, where the step of generating the generated series of images comprises employing a plurality of parameters to generate the generated series of images.

9. The method for VNS of claim 8, where the step of employing the plurality of parameters comprises accessing a memory to retrieve the plurality of parameters.

10. The method for VNS of any of claims 7 - 9, where the step of generating a series of 3D images includes employing a plurality of parameters to generate the series of 3D images.

11. The method for VNS of claim 10 where employing the plurality of parameters further includes accessing a memory to retrieve the plurality of parameters.

12. The method for VNS of claim 11, where generating the series of 3D images further includes accessing previously stored 3D object information.

13. The method for VNS of claim 12, where the step of accessing previously stored 3D object information includes accessing the previously stored 3D object information that is stored locally at the VNS.

14. A non-transitory computer readable media with instructions for a video navigation system for video, where the instructions when executed by a processor perform the steps of:
capturing a series of images with a video capture unit, where the series of images have distortion;
generating a series of 3D images;
generating from the series of images, a series of generated images without distortion; and
overlaying the series of 3D images with the series of generated images.

15. The non-transitory computer readable media with instructions for a video navigation system for video of claim 14, where instructions further perform the steps of accessing a memory to retrieve a plurality of parameters, and employing the plurality of parameters to generate the other series of images.
